# EUROPEAN PATENT SPECIFICATION

(11) **EP 3 015 428 B1**
(45) Date of publication and mention of the grant of the patent: **18.10.2017**
(21) Application number: 14817205.9
(22) Date of filing: 20.06.2014
(51) Int. Cl.: C01B 32/956

(54) **SILICON CARBIDE POWDER**
SILICIUMCARBIDPULVER
POUDRE DE CARBURE DE SILICIUM

(30) Priority: 26.06.2013 JP 2013133948
(43) Date of publication of application: 04.05.2016
(73) Proprietor: Bridgestone Corporation, Tokyo 104-8340 (JP)
(72) Inventor: HASE, Kazuhito, Tokyo 104-8340 (JP)
(74) Representative: Oxley, Robin John George
(86) International application number: PCT/JP2014/066405
(87) International publication number: WO 2014/208461

(56) References cited:
- JP-A- H10 120 411
- US-A1- 2002 165 078
- US-B1- 6 251 353
- US-B1- 6 627 169
- US-B1- 6 632 761

## Description

The present invention relates to a process for preparing a silicon carbide powder.

### BACKGROUND ART

Heretofore, there has been proposed a method for producing a high purity silicon carbide powder by mixing a silicon source (specifically, ethyl silicate), which is liquid at ordinary temperature, a carbon source (specifically, a phenolic resin), which is liquid at ordinary temperature, and a catalyst (specifically, maleic acid) capable of dissolving the carbon source. Specifically, a silicon carbide powder is produced by heating a mixture containing the silicon source, the carbon source, and the catalyst (for example, Patent Literature 1).

In the case of using maleic acid as the catalyst, the content of sulfur contained in the silicon carbide powder is low in comparison with a case of using toluenesulfonic acid as the catalyst. Thus, the use of maleic acid as the catalyst enables the production of a silicon carbide powder suitable in the field of semiconductor where sulfur serves as an impurity.

Additionally, there has also been proposed a technique of heating a mixture containing a silicon source, a carbon source, and a catalyst in two stages in order to produce a silicon carbide powder having an average particle diameter of 100 to 200 µm. Moreover, it is also known that when a ratio between carbon contained in the carbon source and silicon contained in the silicon source (hereinafter, C/Si) is more than 2.0 but less than 2.5, the amount of free carbon can be reduced (for example, Patent Literature 2).

US2002/0165078, US6627169, US6251353 and US6632761 all disclose silicon carbides and processes for the manufacture thereof.

### CITATION LIST

### PATENT LITERATURES

Patent Literature 1: Japanese Patent Application Publication No. Hei 10-120411
Patent Literature 2: Japanese Patent Application Publication No. 2009-173501

### SUMMARY OF INVENTION

### TECHNICAL PROBLEM

As a result of intensive studies, the present inventors have found out optimal ranges of three parameters of silicon source content, carbon source content, and catalyst content in a mixture of a silicon source, a carbon source, and a catalyst, from three viewpoints of the reactivity between carbon and silicon, the amount of free carbon (FC), and the yield of a silicon carbide powder.

Accordingly, the present invention has been made to meet the above-described demand. An object of the present invention is to provide a silicon carbide powder capable of exhibiting favorable results from the viewpoints of the reactivity between carbon and silicon, the amount of free carbon (FC), and the yield of the silicon carbide powder.

### SOLOTION TO PROBLEM

A silicon carbide powder prepared according to the invention is obtained by heating a mixture in a non-oxidizing atmosphere, the mixture containing a silicon source, a carbon source, and a catalyst, the silicon source is methyl silicate, the carbon source is phenolic resin, and the catalyst is maleic acid and derivatives thereof.

The weight percentage of the carbon source is 34.5 weight % or more but 38 weight % or less, when the mixture is represented by 100 weight %.

The weight percentage of the silicon source is 57 weight % or more but 61 weight % or less, when the mixture is represented by 100 weight %.

The weight percentage of the catalyst is 3 weight % or more but 8 weight % or less, when the mixture is represented by 100 weight %.

### ADVANTAGEOUS EFFECTS OF INVENTION

The present invention makes it possible to provide a silicon carbide powder capable of exhibiting favorable results from the viewpoints of the reactivity between carbon and silicon, the amount of free carbon (FC), and the yield of the silicon carbide powder.

### BRIEF DESCRIPTION OF DRAWINGS

Fig. 1 is a flowchart for illustrating a method for producing a silicon carbide powder according to a first embodiment.
Fig. 2 is a table showing the experimental result.
Fig. 3 is a table showing the experimental result.

### DESCRIPTION OF EMBODIMENTS

Hereinafter, a silicon carbide powder prepared according to an embodiment of the present invention will be described with reference to the drawings. Note that, in the following description of the drawings, same or similar reference signs denote same or similar elements and portions.

In addition, it should be noted that the drawings are schematic and ratios of dimensions and the like are different from actual ones. Therefore, specific dimensions and the like should be determined in consideration of the following description. Moreover, the drawings also include portions having different dimensional relationships and ratios from each other in some cases.

### Summary of Embodiment

The silicon carbide powder prepared according to the invention is defined by claim 1.

In the invention, since three parameters of silicon source content, carbon source content, and catalyst content are optimized in the mixture of the silicon source, the carbon source, and the catalyst, a silicon carbide powder is obtained which is favorable from the viewpoints of the reactivity between carbon and silicon, the amount of free carbon, and the yield of the silicon carbide powder.

### First Embodiment

### (Method for Producing Silicon Carbide Powder)

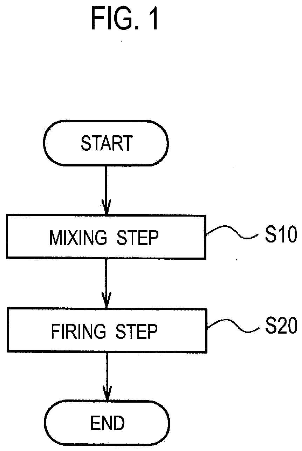

A method for producing a silicon carbide powder according to a first embodiment will be described. Fig. 1 is a flowchart for illustrating the method for producing the silicon carbide powder according to the first embodiment. As shown in Fig. 1, the method for producing the silicon carbide powder according to the first embodiment has a mixing step S10 and a firing step S20.

### (Mixing Step S10)

The mixing step S10 is a step of mixing a silicon source, which is liquid at ordinary temperature, a carbon source, which is liquid at ordinary temperature, and a catalyst (polymerization catalyst or crosslinking catalyst) capable of dissolving the carbon source to thereby form a mixture containing the silicon source, the carbon source, and the catalyst.

The silicon source is methyl silicate (i.e., tetramethoxysilane). As the silicon source, a monomer of methyl silicate may be used, or a polymer of methyl silicate (for example, a low-molecular-weight polymer (oligomer) of methyl silicate) may be used. Here, the term oligomer means a polymer having a polymerization degree of approximately 2 to 15.

As the methyl silicate, it is preferable to use methyl silicate which has a purity determined according to the application of the silicon carbide powder. In a case where high purity methyl silicate is used, the initial impurity content of the methyl silicate is preferably 20 ppm or less, further preferably 5 ppm or less.

The carbon source is a phenolic resin.

In order to homogeneously mix the carbon source with the methyl silicate, the carbon source is liquid at ordinary temperature. Specifically, the carbon source may be a substance dissolved in a solvent, or may be a thermoplastic or heat-soluble substance which softens or liquefies by heating. As the carbon source, it is preferable to use a compound composed only of hydrogen atoms and carbon atoms, from the viewpoint of residual carbon ratio, thermal polymerization, or thermal crosslinking.

The catalyst (polymerization catalyst or crosslinking catalyst) is maleic acid (pKa=1.75) and derivatives thereof. From the viewpoint of solubility in water, the catalyst is selected from maleic acid and derivatives thereof.

Examples of the maleic acid derivatives include maleic anhydride.

The catalyst is a compound composed only of carbon atoms, hydrogen atoms, and oxygen atoms. Since the catalyst is composed only of carbon atoms, hydrogen atoms, and oxygen atoms, such a catalyst does not contain sulfur, unlike toluenesulfonic acid (C₇H₈O₃S), which is a commonly-used catalyst in conventional techniques. Thus, no hazardous sulfur compound is generated in the firing step.

The catalyst has a favorable homogeneity so that the catalyst can react and homogenously dissolve with at least the carbon source. From the viewpoint of reactivity improvement, the catalyst is a compound containing a carboxyl group. Herein, the term "favorable homogeneity" means that the catalyst homogenously diffuses into the carbon source at a molecular level by mixing the carbon source with the catalyst.

(1) The pKa value of maleic acid (1.75) is almost comparable to the pKa value of toluenesulfonic acid (1.4), and maleic acid has enough acidity. (2) Since maleic acid contains both unsaturated bonds and carboxyl groups in the molecule, maleic acid has an affinity with a hydrophobic portion and a hydrophilic portion and is likely to be homogenously mixed with the methyl silicate and the carbon source. (3) Since a strong exothermic reaction is not induced, the hardening reaction moderately takes place, and it is easy to control the reaction rate by the amount of the catalyst added. From these viewpoints, maleic acid is preferably used as the catalyst.

In the first embodiment, the ratio between carbon contained in the mixture of the carbon source, the methyl silicate, and the catalyst and silicon contained in the mixture (hereinafter, C/Si) is not particularly limited, but is preferably 2.3 or more but 2.9 or less.

The C/Si of the mixture is adjusted by the amounts of the methyl silicate, the carbon source, and the catalyst. The C/Si of the mixture can be defined by elemental analysis of a carbide intermediate obtained by carbonizing the mixture.

Herein, when the mixture is represented by 100 weight %, the weight percentage of the carbon source (a phenolic resin) is 34.5 weight % or more but 38 weight % or less. The weight percentage of the silicon source (herein, methyl silicate) is 57 weight % or more but 61 weight % or less. The weight percentage of the catalyst (maleic acid) is 3 weight % or more but 8 weight % or less.

The catalyst may be mixed with the methyl silicate and the carbon source, while being dissolved in a solvent containing no impurity. The catalyst may be used in a saturated state in a solvent such as water or acetone (i.e., as a saturated solution).

Herein, since the methyl silicate, the carbon source, and the catalyst are allowed to react homogenously with each other in the firing step, it is important to homogeneously mix the methyl silicate, the carbon source, and the catalyst. A surfactant may be added as appropriate to the mixture according to the degree of homogeneity of the mixture. As the surfactant, it is possible to use SPAN 20, TWEEN 20 (product name, manufactured by Kanto Chemical Co., Inc.), or the like. The amount of the surfactant added is preferably 5 to 10 weight %, when the mixture is represented by 100 weight %.

In the first embodiment, the methyl silicate, the carbon source, and the catalyst are mixed together in the mixing step S10. Specifically, it is preferable that the methyl silicate and the carbon source are mixed by thoroughly stirring the two and then the catalyst be added thereto. The mixture of the methyl silicate, the carbon source, and the catalyst is solidified. The mixture is preferably solidified into a gel form.

Moreover, after the catalyst is added to the methyl silicate and the carbon source, the mixture may be heated. Further, the mixture may be carbonized by heating the solid mixture at a temperature of 800°C to 1000°C for 30 to 120 minutes in a non-oxidizing atmosphere such as nitrogen or argon. Note that such heating is performed in a temperature range lower than that in the firing step S20, and should be considered as a pretreatment.

### (Firing Step S20)

The firing step S20 is a step of heating the mixture of the methyl silicate, the carbon source, and the catalyst in a non-oxidizing atmosphere to thereby form a silicon carbide powder.

The mixture formed in the mixing step S10 is heated, for example, in an argon atmosphere at 1350°C to 2000°C for approximately 30 minutes to 3 hours, and thereby a silicon carbide powder is obtained.

The term non-oxidizing atmosphere means an atmosphere with no oxidizing gas present. For example, the non-oxidizing atmosphere may be an inert atmosphere (nitrogen, a noble gas such as helium or argon, or the like), or may be a vacuum atmosphere.

Note that, in the firing step S20, carbon contained in the mixture serves as a reducing agent, and a reaction of "SiO₂+C→SiC" takes place.

In a case where the silicon carbide powder obtained in the firing step S20 contains carbon, the silicon carbide powder may be decarbonized by heating in an air atmosphere furnace. The heating temperature for the silicon carbide powder in the decarbonization treatment is for example 700°C.

### (Functions and Effects)

In the first embodiment, the three parameters of silicon source content, carbon source content, and catalyst content are optimized in the mixture of the silicon source, the carbon source, and the catalyst. Thus, a silicon carbide powder is obtained which is favorable from the viewpoints of the reactivity between carbon and silicon, the amount of free carbon, and the yield of the silicon carbide powder.

### Evaluation Result

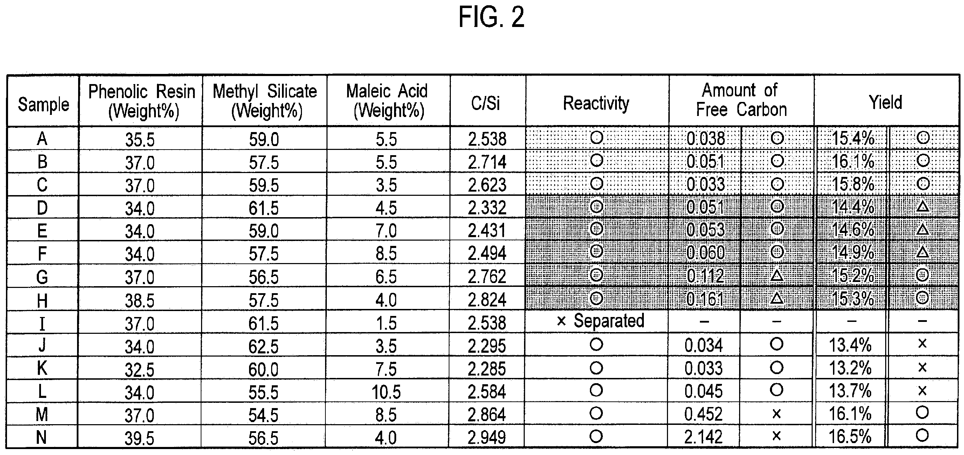

Hereinafter, the evaluation result will be described. Specifically, as shown in Fig. 2, samples A to N were prepared and evaluated for the reactivity between carbon and silicon, the amount of free carbon, and the yield of the silicon carbide powder. More specifically, the samples are different from one another in the three parameters of silicon source content, carbon source content, and catalyst content as shown in Fig. 2. Samples labelled with a "*" below are included by way of reference.

In Fig. 2, as to the amount of free carbon, when the amount of free carbon was less than 0.100, it was determined that a significant effect (○) was obtained; when the amount of free carbon was 0.100 or more but less than 0.300, it was determined that an effect (△) was obtained. Moreover, as to the yield of the silicon carbide powder, when the yield is more than 15%, it was determined that a significant effect (○) was obtained; when the yield was more than 14% but not more than 15%, it was determined that an effect (△) was obtained.

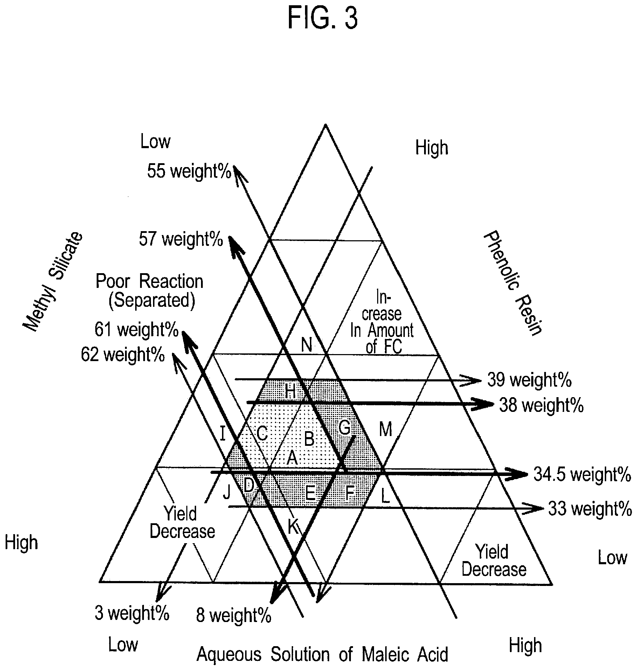

Further, Fig. 3 shows a coordinate space constituted of three axes representing silicon source content, carbon source content, and catalyst content, in which each sample is plotted.

As shown in Figs. 2 and 3, in the samples A to C, the weight percentage of the carbon source (here, a phenolic resin) was 34.5 weight % or more but 38 weight % or less, the weight percentage of the silicon source (here, methyl silicate) was 57 weight % or more but 61 weight % or less, and the weight percentage of the catalyst (here, maleic acid) was 3 weight % or more but 8 weight % or less. It was verified that the samples A to C exhibited sufficient reactivity and significant effects regarding the amount of free carbon and the yield of the silicon carbide powder.

In the samples D* and E*, the weight percentage of the silicon source (here, methyl silicate) was 57 weight % or more but 62 weight % or less, and the weight percentage of the catalyst (here, maleic acid) was 3 weight % or more but 8 weight % or less. On the other hand, the weight percentage of the carbon source (here, a phenolic resin) was 33 weight % or more but less than 34.5 weight %. It was verified that the samples D* and E* exhibited sufficient reactivity and a significant effect regarding the amount of free carbon. On the other hand, regarding the yield of the silicon carbide powder, it was verified that although a significant effect was not obtained, some effect was obtained.

In the sample F*, the weight percentage of the silicon source (here, methyl silicate) was 57 weight % or more but 61 weight % or less. On the other hand, the weight percentage of the carbon source (here, a phenolic resin) was 33 weight % or more but less than 34.5 weight %, and the weight percentage of the catalyst (here, maleic acid) was less than 10 weight % but more than 8 weight %. It was verified that the sample F* exhibited sufficient reactivity and a significant effect regarding the amount of free carbon. On the other hand, regarding the yield of the silicon carbide powder, it was verified that although a significant effect was not obtained, some effect was obtained.

In the sample G*, the weight percentage of the carbon source (here, a phenolic resin) was 34.5 weight % or more but 38 weight % or less, and the weight percentage of the catalyst (here, maleic acid) was 3 weight % or more but 8 weight % or less. On the other hand, the weight percentage of the silicon source (here, methyl silicate) was 55 weight % or more but less than 57 weight %. It was verified that the sample G* exhibited sufficient reactivity and a significant effect regarding the yield of the silicon carbide powder. On the other hand, regarding the amount of free carbon, it was verified that although a significant effect was not obtained, some effect was obtained.

In the sample H*, the weight percentage of the silicon source (here, methyl silicate) was 57 weight % or more but 61 weight % or less, and the weight percentage of the catalyst (here, maleic acid) was 3 weight % or more but 8 weight % or less. On the other hand, the weight percentage of the carbon source (here, a phenolic resin) was 39 weight % or less but more than 38 weight %. It was verified that the sample H* exhibited sufficient reactivity and a significant effect regarding the yield of the silicon carbide powder. On the other hand, regarding the amount of free carbon, it was verified that although a significant effect was not obtained, some effect was obtained.

In the sample I*, the weight percentage of the catalyst (here, maleic acid) was less than 3 weight %. It was verified that since the content of the catalyst (here, maleic acid) was too low, the sample I* did not exhibit sufficient reactivity, and carbon and silicon were separated.

In the sample J*, the weight percentage of the silicon source (here, methyl silicate) was more than 62 weight %. It was verified that since the content of the silicon source (here, methyl silicate) was too high, the sample J* did not exhibit a sufficient effect regarding the yield of the silicon carbide powder.

In the sample K*, the weight percentage of the carbon source (here, a phenolic resin) was less than 33 weight %. It was verified that since the content of the carbon source (here, a phenolic resin) was too low, the sample K* did not exhibit a sufficient effect regarding the yield of the silicon carbide powder.

In the sample L*, the weight percentage of the catalyst (here, maleic acid) was more than 10 weight %. It was verified that since the content of the catalyst (here, maleic acid) was too high, the sample L* did not exhibit a sufficient effect regarding the yield of the silicon carbide powder.

In the sample M*, the weight percentage of the silicon source (here, methyl silicate) was less than 55 weight %. It was verified that since the content of the silicon source (here, methyl silicate) was too low, the amount of free carbon was increased in the sample M*.

In the sample N*, the weight percentage of the carbon source (here, a phenolic resin) was more than 39 weight %. It was verified that since the content of the carbon source (here, a phenolic resin) was too high, the amount of free carbon was increased in the sample N*.

### INDUSTRIAL APPLICABILITY

The present invention makes it possible to provide a silicon carbide powder capable of exhibiting favorable results from the viewpoints of the reactivity between carbon and silicon, the amount of free carbon (FC), and the yield of the silicon carbide powder.

## Claims

1. A process for preparing a silicon carbide powder by heating a mixture in a non-oxidizing atmosphere, wherein
in the mixture containing a silicon source, a carbon source, and a catalyst, the silicon source is methyl silicate, and
when the mixture is represented by 100 weight %,
a weight percentage of the carbon source is 34.5 weight % or more but 38 weight % or less,
a weight percentage of the silicon source is 57 weight % or more but 61 weight % or less, and
a weight percentage of the catalyst is 3 weight % or more but 8weight % or less,
the carbon source is phenolic resin,
and the catalyst is maleic acid and derivatives thereof.

2. The process of claim 1, wherein the heating step is in an argon atmosphere at 1350°C to 2000°C for 30 minutes to 3 hours.

## Patentansprüche

1. Verfahren zum Herstellen eines Siliziumkarbidpulvers durch Erhitzen einer Mischung in einer nicht oxidierenden Atmosphäre, wobei
in der Mischung, die eine Siliziumquelle, eine Kohlenstoffquelle und einen Katalysator enthält, die Siliziumquelle Methylsilikat ist, und
wenn die Mischung durch 100 Gew.-% dargestellt ist,
der Gewichtsanteil der Kohlenstoffquelle 34,5 Gew.-% oder mehr, jedoch weniger als 38 Gew.-% beträgt,
der Gewichtsanteil der Siliziumquelle 57 Gew.-% oder mehr, jedoch weniger als 61 Gew.-% beträgt, und
der Gewichtsanteil des Katalysators 3 Gew.-% oder mehr, jedoch weniger als 8 Gew.-% beträgt,
die Kohlenstoffquelle ein Phenolharz ist,
und der Katalysator Maleinsäure und Derivate davon ist.

2. Verfahren nach Anspruch 1, wobei der Erhitzungsschritt in einer Argonatmosphäre bei 1350°C bis 2000°C während 30 Minuten bis 3 Stunden durchgeführt wird.

## Revendications

1. Procédé destiné à la préparation d'une poudre de carbure de silicium en chauffant un mélange dans une atmosphère non oxidante, dans lequel
dans le mélange contenant une source de silicium, une source de carbone, et un catalyseur, la source silicium est du silicate de méthyle, et,
lorsque le mélange est représenté par 100% en poids,
un pourcentage en poids de la source de carbone est de 34,5% en poids ou plus mais 38% ou moins,
un pourcentage en poids de la source de silicium est de 57% en poids ou plus mais 61% ou moins,
un pourcentage en poids du catalyseur est de 3% en poids ou plus mais 8% en poids ou moins,
la source de carbone est de la résine phénolique,
et le catalyseur est de l'acide maléique et des dérivés de celui-ci.

2. Procédé selon la revendication 1, dans lequel l'étape de chauffement s'effectue dans une atmosphère d'argon à 1350°C jusqu'à 2000°C pendant 30 minutes à 3 heures.
